# FASCICULE DE BREVET EUROPEEN

(11) **EP 3 066 463 B1**
(45) Date de publication et mention de la délivrance du brevet: **01.06.2022**
(21) Numéro de dépôt: 14806013.0
(22) Date de dépôt: 05.11.2014
(51) Int. Cl.: G01N 29/22, G01N 29/24, G01N 29/28

(54) **ÉQUIPEMENT DE CONTRÔLE NON DESTRUCTIF À ULTRASONS**
ELEMENT EINER ULTRASCHALLZERSTÖRUNGSFREIEN STEUEREINRICHTUNG
ITEM OF ULTRASONIC NON-DESTRUCTIVE CONTROL EQUIPMENT

(30) Priorité: 05.11.2013 FR 1360829
(43) Date de publication de la demande: 14.09.2016
(73) Titulaire: AIRBUS (SAS), 31700 Blagnac (FR)
(72) Inventeur: BENTOUHAMI, Franck, 85250 Chavannes en Paillers (FR); LE PINRU, Louis, 44400 Rezé (FR)
(74) Mandataire: Gicquel, Olivier Yves Gérard
(86) Numéro de dépôt international: PCT/FR2014/052813
(87) Numéro de publication internationale: WO 2015/067890

(56) Documents cités:
- EP-A1- 1 630 551
- JP-B1- 5 172 032
- US-A1- 2008 022 774
- None

## Description

La présente invention concerne un équipement de contrôle non destructif à ultrasons.

Plus particulièrement l'invention concerne un équipement de contrôle non destructif à ultrasons d'une pièce de structure dans lequel la pièce est maintenue en position pour son contrôle par un dispositif de support dans une enceinte de l'équipement.

Il est connu de réaliser un contrôle non destructif d'une pièce, par exemple, une pièce réalisée dans un matériau composite ou métallique, au moyen d'un équipement à ultrason.

Un tel équipement de mesure à ultrasons peut être équipé d'une source laser permettant de générer un faisceau ultrasonique dans une chambre de l'équipement et de réaliser avec le faisceau un balayage de la pièce à mesurer, positionnée dans ladite chambre. Un tel équipement de mesure permet d'obtenir une cartographie ultrasonique de l'homogénéité et de l'intégrité de la pièce. Une telle mesure est classiquement réalisée dans une chambre contenant de l'air. Il est cependant possible de réaliser ce type de mesure dans une chambre contenant un autre fluide, tel que de l'eau.

Pendant la mesure, la pièce doit être stable et est donc disposée sur un support et peut être maintenue si nécessaire par différents éléments de maintien tels que des brides par exemple. Dans certains dispositifs, le support est relié à un moyen d'aspiration qui crée une dépression sous la pièce afin de plaquer celle-ci contre le support et stabiliser ainsi la pièce pendant la mesure

L'un des problèmes d'un tel dispositif réside en ce que l'activation du moyen d'aspiration génère une grande surface de contact entre la pièce et le dispositif de support. Cette surface de contact est généralement visible sur la cartographie ultrasonique des résultats et peut apparaitre comme un défaut d'homogénéité sur une zone intègre de la pièce et/ou masquer un défaut dans la zone en contact avec le support qui comporte par exemples des ventouses.

Il est également connu, par exemple du document JP 5172032 B1, ou encore du document US 2008/022774 A1, pour réaliser des contrôles par ultrasons, de maintenir une pièce par une ventouse dont le joint est placé sur la périphérie de la pièce à contrôler afin d'isoler la face de la pièce placée du côté de ladite ventouse de liquide couplant mis en œuvre. Le joint assure dans le cas l'étanchéité recherchée pour protéger les composants fixés sur la pièce. Dans cette configuration, il n'est pas recherché ni obtenu la possibilité de contrôler la partie de la pièce en contact avec la ventouse.

Une telle solution n'est donc pas applicable lorsque la pièce est de dimensions supérieures à celle du support, parfois doit être maintenue par plusieurs supports, les surfaces de contacts entre les supports et la pièce étant visibles sur les images formées et perturbant l'interprétation des images pour la recherche de défauts éventuels.

Le but de la présente invention est de remédier en tout ou partie aux inconvénients précités.

Pour cela, un équipement de contrôle non destructif à ultrasons selon la revendication 1 est revendiqué.

Ainsi la pièce, telle qu'une pièce de structure métallique ou en matériau composite, est maintenue de manière stable pendant la réalisation d'un contrôle non destructif par ultrasons, sans que les moyens qui assurent le support de la pièce ne soient vus par la mesure par ultrason réalisant une image de la pièce et qui sinon en apparaissant par transparence seraient susceptibles de masquer des défauts de la pièce.

Dans une forme de réalisation, l'au moins un joint est de section sensiblement circulaire lorsque aucune pièce n'est maintenue par le dispositif de support. Il est ainsi obtenu un joint simple à produire qui lorsque la pièce est placée en appui porte, vu en section du joint, sur un point du cercle donc de dimension nécessairement faible même après un léger écrasement du joint lorsque la dépression est créée pour tenir la pièce.

Dans une forme de réalisation, l'au moins un joint est de section sensiblement carré ou trapézoïdale, et une longueur d'un côté du carré ou de la petite base du trapèze, est sensiblement inférieure à la résolution de l'image de la surface de la pièce produite par l'équipement, lorsque aucune pièce n'est maintenue par le dispositif de support.

Dans une forme de réalisation, l'au moins un joint est de section triangulaire, lorsque aucune pièce n'est maintenue par le dispositif de support, ledit joint étant placé de sorte que la pièce vienne en appui sur un sommet du triangle.

Suivant ces différentes formes de réalisation, il est obtenu que largeur maîtrisée de la surface de contact entre le joint et la pièce afin de garantir que cette largeur reste inférieure à la résolution définie.

Dans une forme de réalisation, l'au moins un joint est de section à multiple lobes, notamment comporte trois, quatre ou cinq lobes. Il est ainsi multiplié les possibilités d'appui du joint sur la pièce et obtenu par répartition des efforts un moindre écrasement du joint et des largeurs de surfaces de contact réduites qui améliorent l'invisibilité des dites surfaces de contact sur les images réalisées lors du contrôle.

Dans une forme de réalisation, la surface d'appui comporte une gorge périphérique dans laquelle est engagé l'au moins un joint. Le joint est ainsi mieux maintenu et parfaitement positionné lors du placement de la pièce, facilitant l'opération mise en place de la pièce.

Dans un autre mode de réalisation, le dispositif de support comprend un corps creux ayant une première extrémité réalisée dans un matériau élastomère et comportant des rebords étendus en entonnoir formant une ventouse assurant en utilisation le maintien de la pièce par aspiration.

Avantageusement, lorsque le fluide dans lequel se propage le faisceau ultrasonique est un liquide, le matériau constituant le joint est un élastomère, par exemple un Aqualène (TM) dont une impédance acoustique est sensiblement égale à celle dudit liquide. Le joint devient alors invisible aux ultrasons même si les dimensions du joint ne respectent pas en tous points les contraintes dimensionnelles imposées par la résolution de l'image réalisée.

D'autres caractéristiques, détails et avantages de l'invention ressortiront plus clairement de la description détaillée donnée ci-après à titre indicatif en relation avec les dessins sur lesquels :
- la figure 1 présente un dispositif de support selon un mode de réalisation de l'invention,
- la figure 2 présente un équipement de contrôle non destructif à ultrasons suivant l'invention dans lequel une pièce est maintenue dans une enceinte de mesure par deux dispositifs de support tel que le dispositif support de la figure 1,

- les figures 3a et 3b présentent différentes formes de section en coupe transversale d'un joint de dispositifs de support,
- la figure 4 est une vue de dessus d'un joint du dispositif de support selon une variante de réalisation du dispositif, et
- la figure 5 illustre une variante d'un dispositif de support pour un équipement de contrôle non destructif à ultrasons suivant l'invention.

Dans l'ensemble de ces figures, des références identiques désignent des éléments identiques ou analogues.

Sur les figures les différentes parties ne sont pas nécessairement représentées à la même échelle.

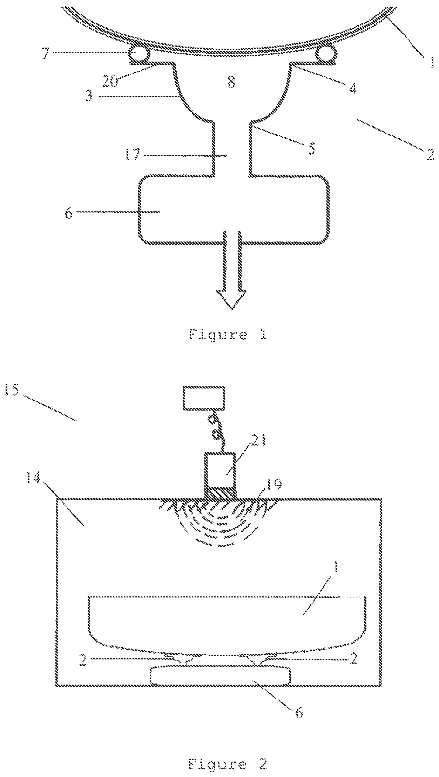

La figure 2 représente une vue schématique d'un équipement 15 de contrôle non destructif à ultrasons comportant une enceinte de mesure 14 dans laquelle est placée une pièce 1 à contrôler.

L'équipement 15 comporte une source 21 produisant dans l'enceinte de mesure 14, en fonctionnement de l'équipement, un faisceau ultrasonique 19 balayant une surface de la pièce 1 à contrôler.

L'équipement comporte également un dispositif 2 de support agencé dans l'enceinte de mesure 14 pour supporter la pièce 1 dans une position voulue pour réaliser le balayage par le faisceau ultrasonique, et maintenir la pièce avec la stabilité nécessaire aux mesures.

On a représenté à la figure 1, un exemple isolé d'un dispositif 2 de support, sur lequel est positionné une pièce 1, sans les autres éléments de l'équipement 15.

Le dispositif 2 comprend un corps creux 3 sensiblement tubulaire. Le corps creux 3 peut présenter une section en coupe transversale, perpendiculaire à un axe sensiblement vertical dudit corps creux, de forme quelconque, par exemple circulaire ou ellipsoïdale, voire polygonale, carrée ou autre. A une première extrémité 4, le corps creux 3 comprend des rebords formant une surface d'appui 20 pour la pièce 1. A une deuxième extrémité 5, le corps creux 3 est configuré pour être relié à un moyen d'aspiration 6. Pour cela l'extrémité 5 est, par exemple, reliée à une première extrémité d'une canalisation 17, dont une deuxième extrémité est connectée à un moyen d'aspiration 6.

Le corps creux 3 du dispositif 2 est formé en un matériau rigide, tel que, de manière indicative, un métal ou un polymère rigide. Le terme rigide signifie dans cette description que le matériau du corps creux 3 peut résister sans se déformer sensiblement, à l'échelle de la pièce et compte tenu des mesures réalisées, à une dépression créée par le moyen d'aspiration 6.

Comme il est compris de la vue d'ensemble de la figure 2, le corps creux 3, outre la dépression formée par les moyens d'aspiration, transmet les efforts générés par le poids de la pièce 1 à des moyens de support, non représentés, situé avantageusement dans l'enceinte de mesure, et à ce titre la résistance et la rigidité du corps creux sont adaptés pour supporter ces efforts liés au poids de la pièce en combinaison avec les effets de la dépression.

Il doit être remarqué que la pièce peut avoir un positionnement variable d'une pièce à une autre ou d'un équipement de contrôle non destructif à un autre. Dans l'exemple illustré sur la figure 2, la pièce est maintenue dans une position sensiblement horizontale en considérant une forme générale de la pièce et par en dessous, la source ultrasonique étant placée au-dessus. Dans une forme de réalisation, non illustrée, la pièce est maintenue dans une position sensiblement verticale, par exemple dans le cas d'une source ultrasonore placée latéralement dans l'enceinte de mesure. Dans une forme de réalisation, non illustrée, la pièce est maintenue dans une position sensiblement horizontale mais suspendue, par exemple dans le cas d'une source ultrasonore placée dans une position basse dans l'enceinte de mesure.

Il est à noter que la valeur de la dépression est liée à l'effort souhaité de maintien de la pièce 1. La valeur minimale de cet effort de maintien est généralement corrélée avec le poids de la pièce 1 qui est supporté par le corps creux 3.

Le dispositif 2 comprend également un joint 7 périphérique placé sur la surface d'appui 20 pour être intercalé entre la pièce 1 et la première extrémité 4 lorsque ladite pièce est dans l'enceinte 14.

Le joint 7 est un joint périphérique qui s'étend en longueur sur la surface d'appui 20 de sorte à fermer un périmètre de la première extrémité 4.

La forme d'une section du joint 7 n'est pas imposée et par exemple peut être circulaire ou polygonale, creuse ou pleine ou avoir d'autres formes adaptées pour supporter la pièce 1 sous réserve de respecter les conditions qui seront détaillées par la suite.

Avantageusement, la forme et les dimensions de la première extrémité 4 forment une surface d'appui 20 suffisante pour maintenir le joint 7 et pour assurer au moyen de la dépression des forces suffisante pour maintenir la pièce 1 sans avoir recours à l'utilisation d'outillages tels que des pinces.

Comme représenté sur la figure 1, le joint 7 est disposé sur le corps creux 3, afin d'être positionné entre celui-ci et la pièce 1, lorsque le dispositif 2 et la pièce 1 sont en position pour le contrôle.

La surface d'appui 20 et le joint 7 sont également dimensionnés pour que le corps creux 3 ne soit pas mis en contact direct avec la pièce 1 mais que la pièce porte pendant le contrôle sur ledit joint.

Le joint 7 est déformable et s'adapte à la forme d'une surface de la pièce 1, forme de la pièce liée à la définition de la pièce et ou à des imperfections de sa surface, au droit de la zone d'appui dudit joint sur la pièce 1.

Une activation du moyen d'aspiration 6 crée une dépression dans le corps creux 3 qui a pour effet d'appliquer un effort sur la pièces 1 d'écrasement du joint 7, écrasement duquel il résulte un contact continu de ladite pièce sur ledit joint et une continuité entre le dispositif 2 et la surface de la pièce 1.

Le joint 7 déformé, la pièce 1 est plaquée contre le joint 7 et maintenue en position par le dispositif 2 et réalise une étanchéité suffisante au fluide contenu dans l'enceinte de mesure au niveau de l'interface corps creux 3/pièce 1 afin de conserver une dépression dans le corps creux voulue pour maintenir immobile ladite pièce pendant le contrôle..

Ce résultat est obtenu avec un joint 7 réalisé dans un matériau pouvant se déformer de façon réversible lorsque le moyen d'aspiration est activé.

En outre, le joint ne doit pas perturber le faisceau d'ultrasons lors du balayage de la pièce afin de ne pas apparaître sur une cartographie de résultats.

Pour obtenir ce résultat, la dimension en largeur de la surface de contact du joint avec la pièce 1 doit être aussi réduite que possible pour être inférieure à la résolution de l'analyse par ultrasons. La section du joint est donc déterminée pour que, en combinaison avec une résistance à l'écrasement dudit joint lorsque la dépression assure le maintien de la pièce contre ledit joint, cette condition sur la largeur de la surface de contact soit respectée.

Autant que possible, le joint 7 est réalisé dans un matériau dont l'impédance acoustique est du même ordre de grandeur que l'impédance acoustique du fluide présent dans l'enceinte de mesure 14.

Les mesures ultrasoniques, peuvent typiquement être réalisées dans l'air, dans l'eau ou encore dans d'autres milieux susceptibles de remplir l'enceinte de mesure 14.

La condition supra sur l'impédance est aujourd'hui pratiquement impossible à réaliser efficacement dans le cas de mesures en milieu aérien, et dans ces cas il est important de respecter les conditions dimensionnelles sur la surface de contact du joint avec la pièce.

Lorsque la mesure ultrasonique est réalisée en milieu aqueux, le joint est avantageusement réalisé avec un matériau élastomère, tel que l'élastomère distribué sous la désignation Aqualène (TM) par la société Olympus, dont l'impédance acoustique est proche de celle de l'eau.

De façon générale, un joint 7 est avantageusement conçu pour chaque milieu de mesure différent avec le matériau présentant une impédance acoustique aussi proche que possible de celle du milieu de mesure et présentant de surcroît les caractéristiques élastiques et dimensionnelles adaptées à la réalisation du joint 7.

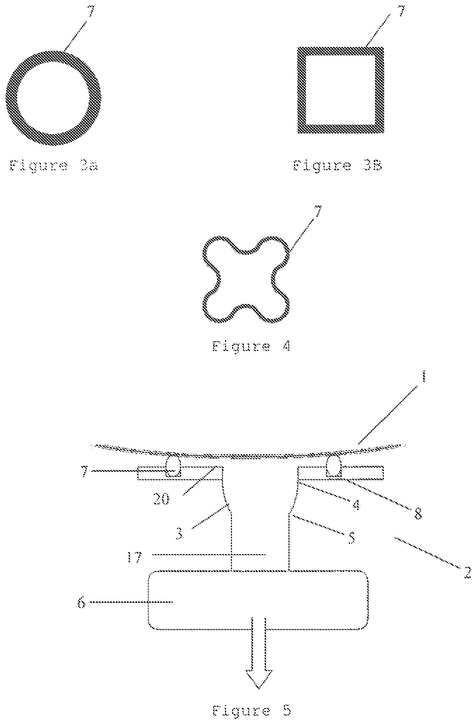

Comme représenté aux figures 3a et 3b, le joint 7 peut présenter des sections en coupe transversale de formes différentes. Les formes en question sont représentées à vide, c'est-à-dire non déformées par une mise en dépression de la pièce venant en appui dans l'équipement.

La forme circulaire de la figure 3a peut être pleine ou creuse, de sorte à être adapté à la rigidité du matériau utilisé pour former ledit joint et à conférer audit joint la souplesse nécessaire à l'étanchéité devant être crée et les caractéristique de faible écrasement pour obtenir une largeur de surface de contact faible par rapport à la résolution de la mesure réalisée par l'équipement de contrôle.

Il doit donc être compris que ces caractéristiques dépendent également de la valeur de la dépression crée dans le corps creux 3 et d'une surface délimitée sur la pièce 1 par le joint périphérique 7. Il est ainsi possible de limiter la déformation par écrasement du joint et donc la largeur de la surface de contact, et si la masse de la pièce à maintenir le justifie de multiplier autant que nécessaire le nombre de dispositifs support 2.

La forme carrée de la figure 3b, qui peut être pleine ou creuse, n'est a priori avantageuse que dans la mesure où la longueur du côté du carré est inférieure à la résolution des mesures réalisées par le système 15. Cette forme présente l'avantage d'une largeur maîtrisée de la largeur de la surface de contact entre le joint et la pièce, largeur qui est sensiblement constante, dans certaines limites de dépression.

D'autre forme, non représentées, de sections transversales de joints, par exemple des sections triangulaires ou trapézoïdales ou encore polygonales, sont adaptées à former une surface de contact joint/pièce de faible largeur maîtrisé. Dans le cas de sections triangulaires ou trapézoïdales, avantageusement, le joint est placé de sorte que la pièce est en appui sur un sommet du triangle ou une petite base du trapèze.

Selon l'invention, la source ultrasonique 21 est une source laser générant un faisceau ultrasonique 19 formant une tâche ou spot qui va balayer la pièce 1.

En fonction des caractéristiques de la source ultrasonique 21, choisies pour répondre à une résolution de l'équipement 15 de contrôle non destructif, le spot présente des dimensions, par exemple un diamètre moyen, plus ou moins grandes.

Pour rester invisible lors du contrôle de la pièce, pour le moins pour ne pas perturber l'interprétation du contrôle, la largeur du joint 7 en contact avec la pièce 1 est inférieure au diamètre moyen du spot formé par le faisceau ultrasonique 19 de l'équipement de mesure 15.

Par exemple, lorsque le diamètre moyen du spot de l'équipement de mesure est de 3 millimètres, la largeur du joint 7 en contact avec la pièce 1 doit être sensiblement inférieur à 3mm, résultat qui est par exemple obtenu avec un diamètre extérieur pour une section circulaire du joint de la figure 3a, ou une largeur pour une section transversale carrée du joint de la figure 3b, par exemple de 2 ou 2,5 millimètres.

Ainsi, dans ces conditions, lorsque le faisceau ultrasonique 19 balaye la pièce 1 posée sur le joint 7 du dispositif de support 2, le joint 7 n'est pas détecté par l'équipement de contrôle 15.

Dans une forme de réalisation, le joint 7 présente une section de forme multilobée, par exemple une forme quadrilobes, comme dans l'exemple illustré sur la figure 4.

Dans cette forme, les capacités de déformation du joint pour réaliser l'étanchéité souhaitée entre le corps creux 3 et la pièce 1 sont assurées par les lobes et la surface de contact entre la pièce et le joint est répartie entre les lobes ce qui a pour résultat de réduire la largeur de ces zones de contact pour maintenir par le choix adapté du matériau, des dimension et de la dépression, une invisibilité desdites zones de contact.

Il doit être remarqué que des résultat similaires à ceux d'un joint à quatre lobes sont obtenus avec un joint à deux lobes, à trois lobes ou avec un joint à cinq lobes, voire plus, sous réserve d'une forme suffisamment accentuée du relief des lobes pour apporter les capacités de déformations attendues du joint suffisante pour assurer l'étanchéité et sans excès pour que la pièce 1 ne se vienne pas en contact avec la surface d'appui 20, et les caractéristiques géométriques voulues pour chacun des lobes en contact avec la pièces 1.

Comme représenté sur la figure 2, une pièce 1 peut être supportée par plusieurs dispositifs 2, et est de préférence supportée par plusieurs dispositifs 2.

Dans ce cas, les dispositifs 2 sont, dans une forme de réalisation, tous reliés au même moyen d'aspiration 6.

Toutefois, de préférence les dispositifs 2, support de la pièce 1, seront répartis entre deux ou plus moyens d'aspiration 6 de sorte que en cas de défaillance d'un moyen d'aspiration, la pièce 1 reste maintenue et ne risque pas de chuter dans l'enceinte 14 de mesure en particulier en cas d'un maintien vertical de la pièce.

Bien entendu, la présente invention n'est pas limitée au mode de réalisation décrit ci-dessus et peut s'étendre à toute variante conforme à son esprit.

Dans une forme de réalisation, comme représentée sur la figure 5, la surface d'appui 20 du corps creux 3 présente une gorge 8 dans laquelle le joint 7 périphérique est engagé de sorte à être maintenu sur la surface d'appui 20, et ainsi faciliter le placement de la pièce 1 sans risquer de déplacement du joint qui pourrait conduire à un défaut d'étanchéité.

Dans le cas de contrôle non destructif à ultrasons dans un milieu liquide, la présente invention est utilisable lorsqu'une cartographie de la pièce 1 est réalisée avec un équipement de contrôle équipé de buses projetant un jet de liquide assurant la propagation du faisceau ultrasonique dans une enceinte contenant essentiellement de l'air, ou avec un équipement réalisant une immersion d'une zone limitée de la pièce, dispositif dit de boîtes à liquide, ou en immersion totale de la pièce dans un bassin.

## Revendications

1. Equipement (15) de contrôle non destructif à ultrasons comportant une enceinte (14) de mesure pour recevoir une pièce (1) à contrôler, comportant une source (21) produisant dans l'enceinte de mesure (14), en fonctionnement de l'équipement, un faisceau ultrasonique (19) de sorte à produire une image d'une surface de pièce (1) à contrôler, comportant au moins un dispositif (2) de support agencé dans l'enceinte de mesure (14) pour supporter la pièce (1) dans une position stable voulue pour réaliser un balayage par le faisceau ultrasonique, ledit dispositif de support comportant un corps creux (3) connecté à des moyens de mise en dépression d'un volume intérieur dudit corps creux et dont un rebord dudit corps creux forme une surface d'appui (20) pour la pièce (1), ledit corps creux comportant au moins un joint (7) périphérique :
a. placé sur la surface d'appui (20) et intercalé entre ladite surface d'appui et une surface de la pièce (1) à contrôler, lorsque la dite pièce est en cours de contrôle de sorte que ladite pièce ne soit pas en contact direct avec le corps creux (3) ;
b. adapté pour réaliser une étanchéité au fluide présent dans l'enceinte (14) entre le volume intérieur en dépression du corps creux (3) et ladite enceinte ;
**caractérisé en ce que** ladite source (21) est une source laser adaptée pour émettre un spot laser qui va balayer la pièce et générer le faisceau ultrasonique (19) et **en ce que** la largeur de la surface de contact du joint (7) avec la pièce (1) est inférieure à un diamètre moyen dudit spot laser (19).

2. Equipement selon la revendication 1 dans lequel l'au moins un joint (7) est de section sensiblement circulaire lorsqu'aucune pièce n'est maintenue par le dispositif (2) de support.

3. Equipement suivant la revendication 1 dans lequel au moins un joint (7) est de section sensiblement carrée lorsqu'aucune pièce n'est maintenue par le dispositif (2) de support.

4. Equipement suivant la revendication 1 dans lequel au moins un joint (7) est de section sensiblement trapézoïdale, lorsqu'aucune pièce n'est maintenue par le dispositif (2) de support, ledit joint étant placé de sorte que la pièce est en appui sur la petite base du trapèze.

5. Equipement suivant la revendication 1 dans lequel au moins un joint (7) est de section triangulaire, lorsqu'aucune pièce n'est maintenue par le dispositif (2) de support, ledit joint étant placé de sorte que la pièce (1) vienne en appui sur un sommet du triangle.

6. Equipement suivant la revendication 1 dans lequel au moins un joint (7) est de section à multiple lobes.

7. Equipement suivant la revendication 6 dans lequel au moins un joint (7) comporte trois, quatre ou cinq lobes.

8. Equipement suivant l'une des revendications précédentes dans lequel la surface d'appui (20) comporte une gorge périphérique (8) dans laquelle est engagé l'au moins un joint (7).

9. Equipement suivant l'une des revendications précédentes dans lequel le fluide dans lequel se propage le faisceau ultrasonique (19) est un liquide et dans lequel un matériau constituant le joint (7) est un élastomère dont une impédance acoustique est sensiblement égale à celle dudit liquide.

10. Equipement suivant l'une des revendications précédentes comportant une pluralité de dispositifs (2) de support dans l'enceinte (14) pour supporter la pièce (1).

## Patentansprüche

1. Nichtdestruktive Ultraschall-Kontrolleinrichtung (15), aufweisend ein Messgehäuse (14) zur Aufnahme eines zu kontrollierenden Teils (1), aufweisend eine Quelle (21), die im Messgehäuse (14) im Betrieb der Einrichtung ein Ultraschallbündel (19) erzeugt, um ein Bild einer zu kontrollierenden Oberfläche eines Teils (1) zu erzeugen, aufweisend wenigstens eine Tragvorrichtung (2), die im Messgehäuse (14) angeordnet ist, um das Teil (1) in einer gewünschten stabilen Position zu tragen, um eine Abtastung durch das Ultraschallbündel durchzuführen, wobei die Tragvorrichtung einen Hohlkörper (3) aufweist, der mit Mitteln zur Unterdruck-Beaufschlagung eines Innenvolumens des Hohlkörpers verbunden ist, und wovon ein Rand des Hohlkörpers eine Auflagefläche (20) für das Teil (1) bildet, wobei der Hohlkörper wenigstens eine periphere Dichtung (7) aufweist:
a. die auf der Auflagefläche (20) platziert und zwischen der Auflagefläche und einer Oberfläche des zu kontrollierenden Teils (1) eingefügt ist, wenn das Teil kontrolliert wird, damit das Teil nicht in direktem Kontakt mit dem Hohlkörper (3) steht;
b. die geeignet ist, eine Dichtheit für das Fluid, das im Gehäuse (14) vorhanden ist, zwischen dem Innenvolumen im Unterdruck des Hohlkörpers (3) und dem Gehäuse zu erzeugen;
**dadurch gekennzeichnet, dass** die Quelle (21) eine Laserquelle ist, die geeignet ist, einen Laserspot zu emittieren, der das Teil abtastet und das Ultraschallbündel (19) erzeugt, und dadurch, dass die Breite der Kontaktfläche der Dichtung (7) mit dem Teil (1) kleiner als ein mittlerer Durchmesser des Laserspots (19) ist.

2. Einrichtung nach Anspruch 1, wobei die wenigstens eine Dichtung (7) einen im Wesentlichen kreisförmigen Querschnitt aufweist, wenn kein Teil von der Tragvorrichtung (2) gehalten wird.

3. Einrichtung nach Anspruch 1, wobei wenigstens eine Dichtung (7) einen im Wesentlichen quadratischen Querschnitt aufweist, wenn kein Teil von der Tragvorrichtung (2) gehalten wird.

4. Einrichtung nach Anspruch 1, wobei wenigstens eine Dichtung (7) einen im Wesentlichen trapezförmigen Querschnitt aufweist, wenn kein Teil von der Tragvorrichtung (2) gehalten wird, wobei die Dichtung so platziert ist, dass das Teil auf der kleinen Basis des Trapezes aufliegt.

5. Einrichtung nach Anspruch 1, wobei wenigstens eine Dichtung (7) einen dreieckigen Querschnitt aufweist, wenn kein Teil von der Tragvorrichtung (2) gehalten wird, wobei die Dichtung so platziert ist, dass das Teil (1) auf dem Scheitelpunkt des Dreiecks aufliegt.

6. Einrichtung nach Anspruch 1, wobei wenigstens eine Dichtung (7) einen Querschnitt mit mehreren Keulen aufweist.

7. Einrichtung nach Anspruch 6, wobei wenigstens eine Dichtung (7) drei, vier oder fünf Keulen aufweist.

8. Einrichtung nach einem der vorhergehenden Ansprüche, wobei die Auflagefläche (20) eine periphere Rille (8) aufweist, mit welcher die wenigstens eine Dichtung (7) in Eingriff steht.

9. Einrichtung nach einem der vorhergehenden Ansprüche, wobei das Fluid, in dem sich das Ultraschallbündel (19) ausbreitet, eine Flüssigkeit ist, und wobei ein Material, das die Dichtung (7) bildet, ein Elastomer ist, von dem eine akustische Impedanz im Wesentlichen gleich jener der Flüssigkeit ist.

10. Einrichtung nach einem der vorhergehenden Ansprüche, aufweisend eine Mehrzahl von Tragvorrichtungen (2) im Gehäuse (14), um das Teil (1) zu tragen.

## Claims

1. Item of equipment (15) for ultrasonic non-destructive inspection, comprising a measurement enclosure (14) for receiving a piece (1) for inspection, comprising a source (21) producing, in the measurement enclosure (14), while the item of equipment is functioning, an ultrasonic beam (19) such as to produce an image of a surface of the piece (1) to be inspected, comprising at least one holder device (2) arranged in the measurement enclosure (14) to support the piece (1) in a stable position required for performing scanning by the ultrasonic beam, said holder device comprising a hollow body (3) connected to means for creating a reduced pressure in an interior volume of said hollow body and of which an edge of said hollow body forms a support surface (20) for the piece (1), said hollow body comprising at least one peripheral gasket (7):
a. placed on the support surface (20) and interposed between said support surface and a surface of the piece (1) to be inspected, when said piece is undergoing inspection such that said piece is not in direct contact with the hollow body (3);
b. designed to seal the fluid present in the enclosure (14) between the interior volume at reduced pressure of the hollow body (3) and said enclosure;
**characterized in that** the source (21) is a laser source designed to emit a laser spot which sweeps the piece and generates an ultrasonic beam (19), and **in that** the width of the contact surface of the gasket (7) with the piece (1) is smaller than a mean diameter of said laser spot (19).

2. Item of equipment according to Claim 1, wherein the at least one gasket (7) has a substantially circular cross section when no piece is held by the holder device (2).

3. Item of equipment according to Claim 1, wherein the at least one gasket (7) has a substantially square cross section, when no piece is held by the holder device (2).

4. Item of equipment according to Claim 1, wherein the at least one gasket (7) has a substantially trapezoidal cross section when no piece is held by the holder device (2), said gasket being placed so that the piece bears on the small base of the trapezium.

5. Item of equipment according to Claim 1, wherein the at least one gasket (7) has a triangular cross section when no piece is held by the holder device (2), said gasket being placed such that the piece (1) comes to bear on an apex of the triangle.

6. Item of equipment according to Claim 1, wherein the at least one gasket (7) has a cross section with multiple lobes.

7. Item of equipment according to Claim 6, wherein the at least one gasket (7) comprises three, four, or five lobes.

8. Item of equipment according to one of the preceding claims, wherein the support surface (20) comprises a peripheral groove (8) in which the at least one gasket (7) is engaged.

9. Item of equipment according to one of the preceding claims, wherein the fluid in which the ultrasonic beam (19) propagates is a liquid, and wherein a material constituting the gasket (7) is an elastomer of which an acoustic impedance is substantially identical to that of said liquid.

10. Item of equipment according to one of the preceding claims, comprising a plurality of support devices (2) in the enclosure (14) to support the piece (1).
